# EUROPÄISCHE PATENTSCHRIFT

(11) **EP 2 403 909 B1**
(45) Veröffentlichungstag und Bekanntmachung des Hinweises auf die Patenterteilung: **13.11.2019**
(21) Anmeldenummer: 10705599.8
(22) Anmeldetag: 25.02.2010
(51) Int. Cl.: C09D 5/08, C23C 22/05

(54) **VERFAHREN ZUR HERSTELLUNG VON SORPTIONSMITTELBESCHICHTETEM ALUMINIUMBAND**
METHOD OF MANUFACTURING SORBENT COATED ALUMINUM BAND
PROCÉDÉ DE FABRICATION DE BANDE D'ALUMINIUM REVÊTUE D'UN SORBANT

(30) Priorität: 03.03.2009 DE 102009003560
(43) Veröffentlichungstag der Anmeldung: 11.01.2012
(73) Patentinhaber: Hydro Aluminium Rolled Products GmbH, 41515 Grevenbroich (DE)
(72) Erfinder: DENKMANN, Volker, 47906 Kempen (DE); HAMPEL, Ulrich, 41516 Grevenbroich (DE); SCHENKEL, Willi, 41515 Grevenbroich (DE); SIEMEN, Andreas, 41363 Jüchen (DE); OETTING, Wolf, San Jose, CA 95124 (US)
(74) Vertreter: Cohausz & Florack
(86) Internationale Anmeldenummer: PCT/EP2010/052405
(87) Internationale Veröffentlichungsnummer: WO 2010/100071

(56) Entgegenhaltungen:
- EP-A1- 1 254 941
- EP-A2- 1 153 990
- JP-A- 10 298 776
- JP-A- 2001 247 822
- US-A- 5 280 054
- US-B1- 6 500 490

## Beschreibung

Die Erfindung betrifft ein Verfahren zur Herstellung eines Aluminiumbandes, bei welchem das Aluminiumband mit einer Sorptionsschicht beschichtet wird, welche ein Bindemittel und ein Sorptionsmittel aufweist. Darüber hinaus betrifft die Erfindung die vorteilhafte Verwendung eines erfindungsgemäß hergestellten Aluminiumbands.

Sorptionsrotoren werden beispielsweise zur Entfeuchtung von Luft eingesetzt und weisen eine Vielzahl von dünnen Kanälen ähnlich einer Wabenstruktur auf, die mit Sorptionsmitteln beschichtet sind. Hierdurch wird erreicht, dass eine möglichst große mit Sorptionsmitteln beschichtete Oberfläche zur Verfügung gestellt werden kann. Das Sorptionsmittel, nimmt nun durch Adsorption oder durch Absorption beispielsweise Wasserdampf aus der durch die Luftkanäle strömenden Luft auf. Dies erfolgt so lange, bis das Sorptionsmittel gesättigt ist und regeneriert werden muss. Die Regeneration erfolgt bei einem Rotationsentfeuchter dadurch, dass zumindest in einem Bereich die Luftkanäle mit erwärmter trockener Luft durchströmt werden. Hierzu dreht der Rotationsentfeuchter sich langsam. Die Luftkanäle durchlaufen dann kontinuierlich üblicherweise drei Sektoren, wobei im ersten Sektor beispielsweise die zu trocknende Luft, beispielsweise Zuluft eines Gebäudes, durch die Luftkanäle strömt und entfeuchtet wird. Im zweiten Sektor wird das Sorptionsmittel durch Einblasen von trockener Luft mit einer Temperatur von 20 bis 120°C regeneriert, d.h. die Feuchtigkeit wird dem Sorptionsmittel wieder entzogen. Im dritten und optionalen Sektor werden die Luftkanäle gespült, so dass diese wieder einwandfrei einsetzbar sind. Es ist allerdings auch ein einfacherer Aufbau mit lediglich zwei Sektoren, einen zum Entfeuchten der Luft und einem Regenerationssektor, möglich. Häufig weisen entsprechende Rotationsentfeuchter und deren Sorptionsrotoren Luftkanäle auf, die aus gefaltetem Papier bereitgestellt werden. Aufgrund der geringen Haltbarkeit dieser Sorptionsrotoren geht man dazu über, die Sorptionsrotoren unter Verwendung von Aluminiumbändern herzustellen. Das Aluminiumband wird hierzu beschichtet, geschnitten und wellenförmig umgeformt, so dass durch die Wellenform Kanäle bereitgestellt werden können. Das Aluminiumband wurde bisher im Tauchverfahren mit einem anschließenden Streuverfahren zum Aufbringen der Sorptionsschicht beschichtet. Dieses Verfahren ist aber recht aufwendig und teuer. Es wurden auch Versuche vorgenommen, das Aluminiumband im Coil-Coating-Verfahren, d.h. durch Verwendung von Auftragswalzen, zu beschichten. Bei diesem kostengünstigen Verfahren zur Beschichtung ergaben sich jedoch Probleme mit der Haftung der Sorptionsschicht auf dem Aluminium sowie ebenfalls stark schwankende Leistungskennwerte des fertigen, beschichteten Aluminiumbandes hinsichtlich des Sorptionsvermögens beispielsweise von Wasserdampf. Als problematisch stellte sich vor allem die Benetzung des Sorptionsmittels durch das Bindemittel heraus.

Die Druckschrift US 5 280 054 offenbart eine hydrophile Beschichtung eines Wärmetauschers bestehend aus Sorptionspartikeln in einem wässrigen Dispersionsmedium, einem Härter und Polyesterharz. Die Beschichtung eines Aluminiumbandes erfolgt im Dip-Coating-Verfahren, anschließend wird das Band erwärmt und getrocknet. Dieses Verfahren hat den Nachteil, dass es, wie bereits beschrieben, sehr aufwendig und teuer ist.

Die Druckschrift EP 1 254 941 A1 offenbart ebenfalls eine hydrophile Beschichtung für metallische Oberflächen eines Wärmetauschers bestehend aus einem hydrophilen Polymer, wasserlöslichem Urethan als Bindemittel und anorganischem Siliziumdioxid. Nach der Beschichtung der Oberfläche wird das Substrat zusammen mit der Beschichtung einem Trocknungsvorgang unterzogen, um einen hydrophilen Film zur erzeugen.

Ein Verfahren zur Herstellung einer hydrophilen Beschichtung, die eine Suspension aus mit einem Polymer der Vinylalkoholreihe beschichteten Siliziumdioxidteilchen in einem wässrigen Medium aufweist, offenbart die EP 1 153 990 A2. Die Beschichtung eines Substrats kann nach dem Tauchverfahren, dem Sprühverfahren, dem Rollbeschichtungsverfahren oder dem Bürstverfahren erfolgen. Nach dem Beschichten wird das Material einer Wärmebehandlung unterzogen, in der der wässrige Teil verdampft und ein hydrophiler Film auf dem Material zurückbleibt.

Auch die japanische Druckschrift JP 2001247822 betrifft eine hydrophile Beschichtung von Wärmetauscherteilen, die aus in Wasser dispergierten Siliziumdioxidteilchen, in Wasser dispergiertem Polymerharz und einem Vernetzungsmittel besteht.

Ebenso wie die zuvor diskutierten Druckschriften betrifft die JP 10 298776 A die hydrophile Beschichtung von aluminiumbasierten Materialien mittels Siliziumdioxid und darüber hinaus einen hydrophilen Kunstharzfilm. Ein spezielles Verfahren zur Herstellung eines beschichteten Lamellenmaterials wird nicht offenbart.

Hiervon ausgehend liegt der vorliegenden Erfindung die Aufgabe zugrunde, ein Verfahren zur Herstellung eines mit einer Sorptionsschicht beschichteten Aluminiumbandes vorzuschlagen, mit welchem auf kostengünstige Weise ein Aluminiumband beschichtet werden kann, das konstante Leistungskennwerte hinsichtlich der Sorption von beispielsweise Wasserdampf aufweist. Darüber hinaus liegt der vorliegenden Erfindung die Aufgabe zugrunde, eine vorteilhafte Verwendung des erfindungsgemäß hergestellten Aluminiumbands vorzuschlagen.

Die oben aufgezeigte Aufgabe wird erfindungsgemäß durch ein Verfahren zur Herstellung eines mit einer Sorptionsschicht beschichteten Aluminiumbandes dadurch gelöst, dass im Coil-Coating-Verfahren eine Suspension auf das Aluminiumband aufgetragen wird, welche neben einer Flüssigkeit mindestens ein als Feststoff ausgebildetes Bindemittel und ein Sorptionsmittel aufweist, und das Aluminiumband zusammen mit der aufgetragenen Suspension einem Trocknungsvorgang unterzogen wird, bei welchem das Bindemittel aktiviert wird, wobei das Bindemittel durch eine Suspensionspolymerisation und/oder Suspensionscopolymerisation hergestellt worden ist.

Durch die Verwendung einer Suspension, die aus einer Flüssigkeit, in der Regel Wasser, mindestens einem als Feststoff ausgebildeten Bindemittel und einem Sorptionsmittel besteht, wird erreicht, dass während des Coil-Coating-Verfahrens die Suspension sich wie eine Flüssigkeit verhält und das Aluminiumband sehr gleichmäßig mit der Suspension beschichtet werden kann, ohne dass das Sorptionsmittel durch das Bindemittel benetzt bzw. die Poren des Sorprtionsmittels vom Bindemittel verschlossen werden. Die auf dem Aluminiumband nun gleichmäßig verteilte Suspension enthält das noch nicht aktivierte Bindemittel sowie das Sorptionsmittel, die ebenfalls sehr gleichmäßig über das Aluminiumband verteilt sind. Das Aluminiumband durchläuft dann einen Trocknungsvorgang, bei welchem das Bindemittel aktiviert wird und die Flüssigkeit der Suspension verdampft.

Ist das Bindemittel durch eine Suspensionspolymerisation und/oder Suspensionscopolymerisation hergestellt worden, liegt das als Feststoff ausgebildete Bindemittel in der Suspension in kugelförmiger, nämlich suspensionspolymerisierter Form vor. Die Bindemittelkugeln können durch Erwärmen während des Trocknungsvorgangs aufgebrochen werden, so dass die dort enthaltenen Bindemittelmoleküle sich untereinander verhaken können und eine besonders dünne Bindemittelschicht bilden, welche die Partikel des Sorptionsmittels, beispielsweise die Silikagelpartikel oder die Zeolithpartikel binden, ohne deren Oberfläche zu benetzen. Darüber hinaus kann durch die kugelförmigen Bindemittel eine besonders homogene Verteilung des Bindemittels erzielt werden, auch wenn der Feststoffanteil des Bindemittels an der Suspension sehr gering ist.

Durch die Aktivierung des Bindemittels erst beim Trocknungsvorgang wird erreicht, dass äußerst geringe Schichten des Bindemittels auf das Aluminiumband auftragbar sind und das Sorptionsmittel durch das Bindemittel nur minimal benetzt wird, ohne dass die Hafteigenschaften des Bindemittels verschlechtert werden. Vorzugsweise kann das als Feststoff ausgebildete Bindemittel beispielsweise ein Polymer sein. Im Ergebnis weist das so hergestellte Aluminiumband besonders homogene Leistungskennwerte hinsichtlich der Sorptionseigenschaften auf und kann gleichzeitig in sehr wirtschaftlicher Form hergestellt werden.

Vorzugsweise erfolgt der Trocknungsvorgang bei einer Temperatur von 60°C bis 380°C. Diese Temperaturen reichen in der Regel aus, um das als Feststoff ausgebildete Bindemittel zu aktivieren. Unter der Aktivierung des Bindemittels wird erfindungsgemäß verstanden, dass das Bindemittel in einen Zustand überführt wird, in welchem dieses zu einer Verbindung zwischen dem Sorptionsmittel und dem Aluminiumband führt. Beispielsweise wird dies bei polymeren Bindemitteln durch eine Verflüssigung der Feststoffpartikel und ein Aushärten dieser verflüssigten Feststoffpartikel beim Trocknen und/oder beim Abkühlen nach dem Trocknen erreicht.

Gemäß einer weiteren vorteilhaften Ausgestaltung des erfindungsgemäßen Verfahrens werden als Sorptionsmittel Zeolithe oder Silikagele verwendet, da diese kostengünstig sind und besonders gute Sorptionseigenschaften beispielsweise hinsichtlich Wasserdampf aufweisen. Daneben ist auch denkbar Lithiumchlorid als Sorptionsmittel zu verwenden.

Besonders gute Eigenschaften im Hinblick auf eine Haftung an dem Aluminiumband sowie ein Binden der Sorptionsmittel wird dadurch erreicht, dass das Bindemittel ein Gemisch aus Acrylat- und Styrolcopolymerisat, ein Gemisch aus Polyvinylacetatpolymeren und -copolymeren, Polyvinylacetale, Polyvinylalkohole, Polyvinylether, Polyurethan und/oder Polymethacrylathomo- und -copolymere enthält. Die genannten Bindemittel können alle in suspensionspolymerisierter Form hergestellt werden und zeigen in aktivierter Form auf dem Aluminiumband sehr gute Hafteigenschaften für das Sorptionsmittel. Die Benetzung des Sorptionsmittels ist bei diesen Materialien bei geringer Schichtdicke des Bindemittels gering.

Um die Sorptionseigenschaften des Aluminiumbandes spezifisch einzustellen, beträgt der Feststoffanteil der Sorptionsmittel in der Suspension zwischen 5% und 90%. Besonders hohe Leistungskennwerte wurden mit Feststoffanteilen von mehr als 70% erzielt. Ein höherer Anteil von mehr als 90% an Sorptionsmitteln birgt die Gefahr, dass die Hafteigenschaften aufgrund eines zu geringen Anteils an Bindemitteln verschlechtert werden.

Werden der vorzugsweise wässrige Suspension Polyvinylalkohole, Polyacrylate und/oder Polyvinylbutyrale als Additive zugegeben, kann die Sorptionswirkung der Sorptionsschicht des Aluminiumbandes weiter optimiert werden, da für die Sorptionsmittelpartikel zusätzliche Bindungsplätze durch das Hinzufügen der Additive zur Verfügung gestellt werden können und damit der Feststoffanteil des Sorptionsmittels weiter erhöht werden kann.

Vorzugsweise werden Silbernanopartikel mit in das Beschichtungssystem integriert, so dass das Aluminiumband mit der Sorptionsschicht eine antibakterielle Wirkung hat. Die Silbernanopartikel werden hierzu in der Suspension auf das Aluminiumband aufgetragen. Denkbar ist damit auch durch Zugabe anderer funktionaler Bestandteile in die Suspension andere spezifische Eigenschaften mit der Sorptionsschicht zu realisieren.

Gemäß einer weiteren Ausführungsform wird die Oberfläche des Aluminiumbandes vor der Beschichtung vorbehandelt, vorzugsweise chromatiert. Dies verbessert die Hafteigenschaften des Bindemittels sowie die Korrosionseigenschaften des Aluminiumbandes.

Gemäß einer weiteren Ausführungsform weist das erfindungsgemäß hergestellte Aluminiumband eine Dicke von 0,03 mm bis 0,6 mm, vorzugsweise 0,06 mm bis 0,2 mm auf. Entsprechende Aluminiumbänder können nicht nur besonders wirtschaftlich mit einem Sorptionsmittel beschichtet werden, sondern auch leicht zu Sorptionsrotoren verarbeitet werden. Hierzu müssen die Aluminiumbänder entsprechend zugeschnitten, wellenförmig umgeformt und aufgewickelt werden.

Gemäß einer weiteren Ausführungsform des erfindungsgemäß hergestellten Aluminiumbandes hat es sich gezeigt, dass besonders hohe Leistungskennwerte für die Sorption dadurch erreicht werden können, dass die Dicke der Sorptionsbeschichtung 2 bis 30 g/m², vorzugsweise 5 bis 8 g/m² beträgt. Bei diesen Schichtdicken ergaben sich optimale Hafteigenschaften bei maximalen Sorptionskennwerten.

Besteht gemäß einer nächsten Ausführungsform des erfindungsgemäß hergestellten Aluminiumbandes das Aluminiumband aus einer Aluminiumlegierung vom Typ EN AW 8006 oder EN AW 8011, weisen die Aluminiumbänder besonders gute Festigkeitswerte auf, so dass die besonders geringen Dicken leicht verarbeitbar sind. Beispielsweise weisen entsprechende Aluminiumbänder eine Streckgrenze von mehr als 180 MPa und eine Zugfestigkeit von mehr als 250 MPa auf und besitzen daher optimale Verarbeitungseigenschaften für die Herstellung von Sorptionsrotoren. Optional kann auch ein zuvor vorbehandeltes, vorzugsweise chromatiertes Aluminiumband mit Sorptionsmitteln beschichtet werden, so dass die Haft- und Korrosionseigenschaften verbessert sind.

Schließlich ist die Verwendung eines erfindungsgemäß hergestellten Aluminiumbandes zur Herstellung von Wärmetauschern, Rotationswärmetauschern, insbesondere Sorptionsrotoren und aktiven Trocknungsvorrichtungen besonders vorteilhaft, da hier besonders große mit Sorptionsmitteln beschichtete Oberflächen benötigt werden, welche auf wirtschaftliche Weise durch das erfindungsgemäße Verfahren und den damit hergestellten, beschichteten Aluminiumbänder zur Verfügung gestellt werden können. Besonders dünne Aluminiumbänder mit einer Dicke von 0,03 mm bis 0,6 mm erlauben die Konstruktion von besonders kompakten Sorptionsrotoren, Trocknungseinrichtungen.

Es gibt nun eine Vielzahl von Möglichkeiten, das erfindungsgemäße Verfahren zur Herstellung von sorptionsmittelbeschichteten Aluminiumbändern, das erfindungsgemäße Aluminiumband sowie dessen Verwendung weiterzuentwickeln und auszugestalten. Hierzu wird verwiesen einerseits auf die dem Patentanspruch 1 nachgeordneten Patentansprüche sowie auf die Beschreibung von Ausführungsbeispielen in Verbindung mit der Zeichnung. In der Zeichnung zeigt
- Fig. 1): eine schematische Ansicht eines ersten Ausführungsbeispiels des erfindungsgemäßen Verfahrens zur Beschichtung eines Aluminiumbandes mit einer Sorptionsschicht,
- Fig. 2)a-c): in einer schematischen Schnittansicht ein erfindungsgemäß hergestelltes Aluminiumband zu drei verschiedenen Zeitpunkten während des erfindungsgemäßen Verfahrens,
- Fig. 3): eine mikroskopische Aufnahme einer Oberfläche eines erfindungsgemäß hergestellten Aluminiumbandes,
- Fig. 4): in einer schematischen, perspektivischen Darstellung ein Ausführungsbeispiel einer erfindungsgemäßen Verwendung des beschichteten Aluminiumbandes in einem Sorptionsrotor und
- Fig. 5): eine Teilansicht eines Sorptionsrotors mit einem erfindungsgemäß hergestellten Aluminiumband.

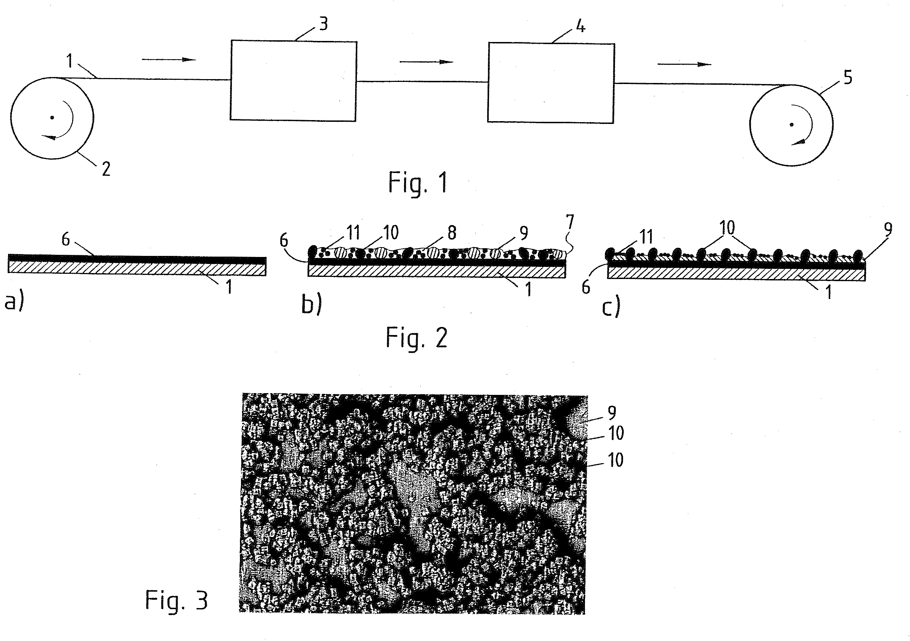

In Fig. 1 ist zunächst das erfindungsgemäße Verfahren zur Beschichtung eines Aluminiumbandes 1 mit einer Sorptionsschicht schematisch dargestellt. Das Aluminiumband 1 wird von einer Abwickelhaspel 2 abgewickelt und einer Coil-Coating-Beschichtungseinrichtung 3, welche nicht dargestellte Auftragswalzen umfasst, zugeführt. Nach dem ein- oder beidseitigen Beschichten in der Coil-Coating-Einrichtung 3 wird das Aluminiumband 1 einem Durchlaufofen 4 zugeführt, welcher das Aluminiumband 1 mit der aufgetragenen Suspension aus Sorptionsmittel und Bindemittel einem Trocknungsvorgang unterzieht. Die Temperaturen während des Trocknungsvorgangs betragen auf der Metalloberfläche maximal 60°C bis 300°C, d.h., die PMT (peak metal temperature) liegt zwischen 60 °C und 300 °C. Anschließend wird das Aluminiumband 1, vorzugsweise im abgekühlten Zustand, auf einer Aufwickelhaspel 5 aufgewickelt. Natürlich ist es auch denkbar, nach dem Trocknungsvorgang das Aluminiumband unmittelbar weiteren Bearbeitungsvorgängen, beispielsweise einem Verfahren zur Herstellung von Zuschnitten, einem Auftrennen des Bandes in beispielsweise für Sorptionsrotoren zu verwendende Breiten und/oder einer wellenförmigen Umformung zuzuführen.

Erfindungsgemäß wird während des Trocknungsvorgangs erst das als Feststoff ausgebildete Bindemittel aktiviert und kann über die Suspension in entsprechend geringen Schichtdicken auf dem Aluminiumband 1 verteilt werden. Es werden hierdurch besonders geringe Schichtdicken des Bindemittels möglich, welche zu einer minimalen Benetzung der Oberfläche des Sorptionsmittels durch das Bindemittel führen. Insofern wird eine maximale Oberfläche des Sorptionsmittels auf dem Aluminiumband zur Verfügung gestellt.

Dies wird in Fig. 2a-c deutlich. Das Aluminiumband 1 in dem in Fig. 2 dargestellten Ausführungsbeispiel weist beispielsweise eine Chromatierung 6 auf, welche die Hafteigenschaften sowie die Korrosionseigenschaften des Aluminiumbandes 1 verbessert. Durch ein Coil-Coating-Verfahren 3 unter Verwendung von Auftragswalzen wird nun eine Suspension 7 aufweisend eine Flüssigkeit 8, vorzugsweise Wasser, ein als Feststoff ausgebildetes Bindemittel 9 und das Sorptionsmittel 10 auf das Band aufgetragen. Bei dem in Fig. 2b dargestellten Ausführungsbeispiel sind in der Suspension zusätzlich noch Silbernanopartikel 11 enthalten, welche nach dem Trocknungsvorgang eine antibakterielle Wirkung auf der Aluminiumbandoberfläche entfalten. Wie Fig. 2b zeigt, ist das Bindemittel 9 in der Suspension 7 zunächst nicht aktiviert und liegt vorzugsweise als Feststoff in einer kugelförmigen Form, fein verteilt auf dem Aluminiumband vor. Die kugelförmige Form wird beispielsweise durch eine Suspensionspolymerisation und/oder Suspensionscopolymerisation eines Gemisches aus Acrylat- Styrolpolymeren erreicht.

Fig. 2c zeigt nun das Aluminiumband 1 in einer Schnittansicht nach dem Trocknungsvorgang. Während des Trocknungsvorgangs verdampft nicht nur das Wasser 8 der Suspension 7, sondern es wird auch das Bindemittel 9 aktiviert, indem die kugelförmigen Bindemittelpartikel während des Trocknungsvorgangs aufplatzen und eine extrem dünne Bindemittelschicht 9 auf dem Aluminiumband 1 hinterlassen. Die Silbernanopartikel 11 verteilen sich in der Bindemittelschicht 9 und liegen zum Teil auf der Oberfläche zwischen den Sorptionsmittelpartikeln 10 und bewirken eine antibakterielle Wirkung.

Eine mikroskopische Oberflächenaufnahme eines erfindungsgemäß beschichteten Aluminiumbandes zeigt Fig. 3. Bei dem Ausführungsbeispiel in Fig. 3 ist als Bindemittel ein Gemisch aus Acrylat- und Styrolcopolymerisat verwendet worden sowie als Sorptionsmittel Silikagel. Es ist deutlich zu erkennen, dass das Bindemittel 9 das Sorptionsmittel 10 nur wenig benetzt, so dass die Sorptionsfähigkeit des Sorptionsmittels 10 nur sehr geringfügig beeinträchtigt wird. Im Ergebnis können Aluminiumbänder mit einer hohen Sorptionsfähigkeit zur Verfügung gestellt werden.

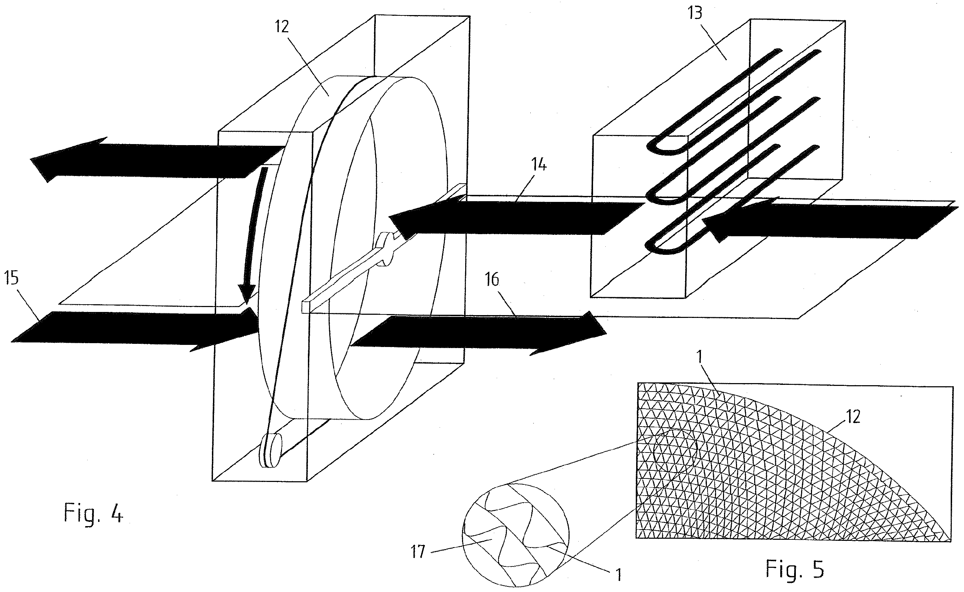

Diese werden vorzugsweise in Sorptionsrotoren 12 eingesetzt, dessen Funktionsweise in der perspektivischen Ansicht in Fig. 4 dargestellt ist. Ein Sorptionsrotor 12 besteht üblicherweise aus einem flachen Zylinder, welcher in konzentrischen Bahnen verteilte Luftkanäle aufweist. Die Luftkanäle sind in dem in Fig. 4 dargestellten Ausführungsbeispiel aus einem entsprechend gewickelten, wellenförmigen Aluminiumband 1 hergestellt. Vorzugsweise sind die Aluminiumbänder etwa 0,07 mm dick und entsprechend wellenförmig geformt.

Der langsam drehende Sorptionsrotor 12 wird zumindest in einem Sektor mit über eine Heizvorrichtung 13 erwärmter Luft 14 beaufschlagt, so dass die auf dem Aluminiumband 1 vorhandene Sorptionsschicht in den mit heißer Luft durchströmten Bereichen regeneriert wird, d.h., dass aufgrund der erwärmten Luft, welche eine Temperatur von üblicherweise 20 bis 120°C aufweist, die im Sorptionsmittel enthaltene Feuchtigkeit entzogen wird. Die so regenerierten Luftkanäle werden dann durch die langsame Rotation des Sorptionsrotors in den zweiten Sektor gedreht, in welchem sie beispielsweise durch feuchte Außenluft 15 durchströmt werden. Das Sorptionsmittel 10 nimmt dabei die in der Außenluft 15 enthaltene Feuchtigkeit auf, so dass die einströmende Luft 16 getrocknet ist. Sorptionsrotoren 12, welche das erfindungsgemäße Aluminiumband aufweisen, zeigen hohe Leistungskennwerte hinsichtlich der Aufnahme von Feuchtigkeit aus der Luft, wenn als Sorptionsmittel beispielsweise Silikagele oder Zeolithe verwendet werden. Durch das erfindungsgemäße Verfahren können die notwendigen Aluminiumbänder auch auf wirtschaftliche Weise hergestellt werden.

Fig. 5 zeigt schließlich den Aufbau eines Sorptionsrotors 12 und den wellenförmigen Verlauf eines erfindungsgemäß beschichteten Aluminiumbandes 1 im Sorptionsrotor. Das wellenförmig umgeformte Aluminiumband 1 ist zwischen konzentrisch angeordneten, kreisförmigen Aluminiumbahnen angeordnet, so dass Luftkanäle 17 gebildet werden. Vorzugsweise sind die im Sorptionsrotor 12 verwendeten Aluminiumbänder 1 beidseitig beschichtet, um die Sorptionsfähigkeit des Sorptionsrotors zu maximieren.

## Patentansprüche

1. Verfahren zur Herstellung eines Aluminiumbandes, bei welchem das Aluminiumband mit einer Sorptionsschicht beschichtet wird, welche ein Bindemittel und ein Sorptionsmittel aufweist,
**dadurch gekennzeichnet, dass**
im Coil-Coating-Verfahren eine Suspension auf das Aluminiumband aufgetragen wird, welche eine Flüssigkeit, mindestens ein als Feststoff ausgebildetes Bindemittel und ein Sorptionsmittel aufweist und das Aluminiumband zusammen mit der aufgetragenen Suspension einem Trocknungsvorgang unterzogen wird, bei welchem die Flüssigkeit der Suspension verdampft und das Bindemittel aktiviert wird, wobei das Bindemittel durch eine Suspensionspolymerisation und/oder Suspensionscopolymerisation hergestellt worden ist.

2. Verfahren nach Anspruch 1,
**dadurch gekennzeichnet, dass**
der Trocknungsvorgang bei Temperaturen von 60 °C bis 380 °C erfolgt.

3. Verfahren nach Anspruch 1 oder 2,
**dadurch gekennzeichnet, dass**
als Sorptionsmittel Zeolithe oder Silikagele verwendet werden.

4. Verfahren nach einem der Ansprüche 1 bis 3,
**dadurch gekennzeichnet, dass**
das Bindemittel ein Gemisch aus Acrylat- und Styrolcopolymerisat, ein Gemisch aus Polyvinylacetatpolymeren und
-copolymeren, Polyvinylacetale, Polyvinylalkohole, Polyvinylether, Polyurethan- und/oder Polymethacrylathomo- und -copolymere aufweist.

5. Verfahren einem der Ansprüche 1 bis 4,
**dadurch gekennzeichnet, dass**
der Feststoffanteil der Sorptionsmittel in der Suspension zwischen 5 % und 90 % beträgt.

6. Verfahren einem der Ansprüche 1 bis 5,
**dadurch gekennzeichnet, dass**
die Suspension als Additive Polyvinylalkohole, Polyacrylate und/oder Polyvinylbutyrale aufweist.

7. Verfahren einem der Ansprüche 1 bis 6,
**dadurch gekennzeichnet, dass** Silbernanopartikel in dem Beschichtungssystem integriert sind.

8. Verfahren einem der Ansprüche 1 bis 7,
**dadurch gekennzeichnet, dass**
die Oberfläche des Aluminiumbandes vor dem Beschichtungsvorgang vorbehandelt, vorzugsweise chromatiert wird.

9. Verfahren nach einem der Ansprüche 1 bis 8,
**dadurch gekennzeichnet, dass** das Aluminiumband eine Dicke von 0,03 mm bis 0,6 mm, vorzugsweise 0,06 mm bis 0,2 mm aufweist.

10. Verfahren nach Anspruch 9,
**dadurch gekennzeichnet, dass**
die Dicke der Sorptionsbeschichtung 2 bis 30 g/m², vorzugsweise 5 bis 8 g/m² beträgt.

11. Verfahren nach Anspruch 9 oder 10,
**dadurch gekennzeichnet, dass**
das Aluminiumband aus einer Aluminiumlegierung vom Typ EN AW 8006 oder EN AW 8011 besteht.

12. Verwendung eines Aluminiumbandes beschichtet mit einem Verfahren nach einem der Ansprüche 1 bis 8 zur Herstellung von Wärmetauschern, Rotationswärmetauschern, insbesondere Sorptionsrotoren und aktiven Trocknungsvorrichtungen.

## Claims

1. Method for producing an aluminium strip, in which the aluminium strip is coated with a sorption layer which has a binder and a sorbent, **characterised in that** a suspension is applied to the aluminium strip in the coil-coating process, which comprises a liquid, at least one binder, formed as a solid, and a sorbent, and the aluminium strip together with the applied suspension is subjected to a drying process, in which the liquid in the suspension is evaporated and the binder is activated, wherein the binder was produced by suspension polymerisation and/or suspension copolymerisation.

2. Method according to Claim 1, **characterised in that** the drying process takes place at temperatures of 60°C to 380°C.

3. Method according to Claim 1 or 2, **characterised in that** zeolites or silica gels are used as sorbents.

4. Method according to any one of Claims 1 to 3, **characterised in that** the binder comprises a mixture of acrylate copolymer and styrene copolymer, a mixture of polyvinyl acetate polymers and copolymers, polyvinyl acetals, polyvinyl alcohols, polyvinyl ethers, polyurethane and/or polymethacrylate homopolymers and copolymers.

5. Method according to any one of Claims 1 to 4, **characterised in that** the solids content of the sorbents in the suspension is between 5% and 90%.

6. Method according to any one of Claims 1 to 5, **characterised in that** the suspension comprises polyvinyl alcohols, polyacrylates and/or polyvinyl butyrals as additives.

7. Method according to any one of Claims 1 to 6, **characterised in that** silver nanoparticles are integrated into the coating system.

8. Method according to any one of Claims 1 to 7, **characterised in that** the surface of the aluminium strip is pre-treated, preferably chromated, before the coating process.

9. Method according to any one of Claims 1 to 8, **characterised in that** the aluminium strip has a thickness of 0.03 mm to 0.6 mm, preferably 0.06 mm to 0.2 mm.

10. Method according to Claim 9, **characterised in that** the thickness of the sorption coating is 2 to 30 g/m², preferably 5 to 8 g/m².

11. Method according to Claim 9 or 10, **characterised in that** the aluminium strip consists of an EN AW 8006 or EN AW 8011 type aluminium alloy.

12. Use of an aluminium strip coated using a method according to any one of Claims 1 to 8 for producing heat exchangers, circulating heat exchangers, in particular sorption rotors and active dehumidifying devices.

## Revendications

1. Procédé de fabrication d'une bande d'aluminium, dans lequel la bande d'aluminium est revêtue d'une couche de sorption qui comprend un liant et un agent de sorption, **caractérisé en ce que**, dans le procédé de coil coating, une suspension est appliquée sur la bande d'aluminium qui comprend un liquide, présente au moins un liant sous forme d'un solide et d'un agent de sorption et la bande d'aluminium est soumise, avec la suspension appliquée, à un processus de séchage dans lequel le liquide de la suspension s'évapore et le liant est activé, le liant ayant été préparé par polymérisation en suspension et/ou copolymérisation en suspension.

2. Procédé selon la revendication 1, **caractérisé en ce que** le processus de séchage a lieu à des températures de 60°C à 380°C.

3. Procédé selon la revendication 1 ou 2, **caractérisé en ce que** des zéolithes ou des gels de silice sont utilisés comme agents de sorption.

4. Procédé selon l'une quelconque des revendications 1 à 3, **caractérisé en ce que** le liant comprend un mélange de copolymères d'acrylate et de styrène, un mélange de polymères et copolymères d'acétate de polyvinyle, d'acétals de polyvinyle, d'alcools polyvinyliques, d'éthers polyvinyliques, de polyuréthannes et/ou d'homopolymères et copolymères de polyméthacrylate.

5. Procédé selon l'une quelconque des revendications 1 à 4, **caractérisé en ce que** la teneur en matières solides des absorbants dans la suspension est comprise entre 5% et 90%.

6. Procédé selon l'une quelconque des revendications 1 à 5, **caractérisé en ce que** la suspension comprend des alcools polyvinyliques, des polyacrylates et/ou des polyvinylbutyrals comme additifs.

7. Procédé selon l'une quelconque des revendications 1 à 6, **caractérisé en ce que** des nanoparticules d'argent sont intégrées dans le système de revêtement.

8. Procédé selon l'une quelconque des revendications 1 à 7, **caractérisé en ce que** la surface de la bande d'aluminium est prétraitée, de préférence chromatée, avant le procédé de revêtement.

9. Procédé selon l'une quelconque des revendications 1 à 8, **caractérisée en ce que** la bande d'aluminium a une épaisseur de 0,03 mm à 0,6 mm, de préférence 0,06 mm à 0,2 mm.

10. Procédé selon la revendication 9, **caractérisé en ce que** l'épaisseur du revêtement de sorption est de 2 à 30 g/m², de préférence de 5 à 8 g/m².

11. Procédé selon la revendication 9 ou 10, **caractérisé en ce que** la bande d'aluminium est constituée d'un alliage d'aluminium du type EN AW 8006 ou EN AW 8011.

12. Utilisation d'une bande d'aluminium revêtue d'un procédé selon l'une quelconque des revendications 1 à 8 pour la fabrication d'échangeurs de chaleur, d'échangeurs de chaleur rotatifs, en particulier de rotors à sorption et de dispositifs de séchage actifs.
